(19) **Europäisches Patentamt / European Patent Office / Office européen des brevets**

(11) **EP 1 529 191 B1**

(12) **EUROPEAN PATENT SPECIFICATION**

(45) Date of publication and mention
of the grant of the patent:
**01.02.2012 Bulletin 2012/05**

(51) Int Cl.:
*F28D 1/06* (2006.01)     *F28D 7/00* (2006.01)
*F28D 7/02* (2006.01)     *F28F 9/013* (2006.01)

(21) Application number: **03787770.1**

(22) Date of filing: **08.08.2003**

(86) International application number:
**PCT/EP2003/008942**

(87) International publication number:
**WO 2004/017007 (26.02.2004 Gazette 2004/09)**

(54) **REDUCED VOLUME HEAT EXCHANGERS**

WÄRMETAUSCHER MIT REDUZIERTEM VOLUMEN

ÉCHANGEURSDE CHALEUR À VOLUME RÉDUIT

(84) Designated Contracting States:
**AT BE BG CH CY CZ DE DK EE ES FI FR GB GR HU IE IT LI LU MC NL PT RO SE SI SK TR**

(30) Priority: **09.08.2002 GB 0218442**
**20.08.2002 GB 0219372**
**30.08.2002 GB 0220159**

(43) Date of publication of application:
**11.05.2005 Bulletin 2005/19**

(73) Proprietor: **Ashe Morris Limited**
**Cheshire WA7 4QX (GB)**

(72) Inventors:
• **ASHE, Robert**
**Hampshire**
**GU51 1BF (GB)**

• **MORRIS, David**
**Appleton,**
**Warrington,**
**Cheshire WA4 5NW (GB)**

(74) Representative: **Bawden, Peter Charles**
**Bawden & Associates**
**4 The Gatehouse**
**2 High Street**
**Harpenden,**
**Hertfordshire AL5 2TH (GB)**

(56) References cited:
**DE-A- 4 241 179     DE-A- 19 624 937**
**GB-A- 273 306     GB-A- 424 063**
**GB-A- 835 297     US-A- 3 357 408**
**US-A- 4 336 614     US-A- 4 343 626**

**EP 1 529 191 B1**

**Description**

The present invention relates to improvements in or relating to heat exchangers according to the preamble of claim 1. US-A-4343626 shows such a heat exchanger.

Heat exchangers are used to add or remove heat from gases liquids and solids. Different designs and applications exist but the present invention is concerned with types where heating or cooling fluid flows within a conduit which is within or in close proximity to the material being heated or cooled. Of particular interest however are those where the heat transfer fluid flows through some form of jacket, coil or pipe. Examples of this include tanks or pipes with internal or external jackets, coils or plates. The present invention is also applicable to many types of equipment designed for specific process functions such as reactors, reaction calorimeters, fermenters, cell growth vessels, extruders, dryers, mixers, mills, filters etc.

The heat exchangers with which the present invention is concerned are designed to have reduced inventories of heat transfer fluid within the jacket, coil or plate. They are referred to in this document as reduced volume heat exchangers.

The gas or liquid which is used to deliver and remove heat is referred to as the heat transfer fluid. The heat transfer fluid may be a proprietary product such as Syltherm XLT, Dowtherm J or a non proprietary fluid such as water, ethylene glycol or any other fluid which is suitable as a heat transfer fluid. The heat transfer fluid might also be a gas or vapour which can condense or boil.

The material which is to be heated or cooled is referred to as the process material. The process material may be liquid, gas, powder, solids or mixtures thereof. The surface which separates the heat transfer fluid or heat transfer fluid conduit from the process material and, that part of the surface which is in direct contact with the process material is referred to as the process heat transfer surface. The volume of heat transfer fluid contained within the conduit may be referred to as hold up volume. Where there is a containment conduit for heat transfer fluid which is not part of the heat transfer surface, this is referred to as a conductor pipe.

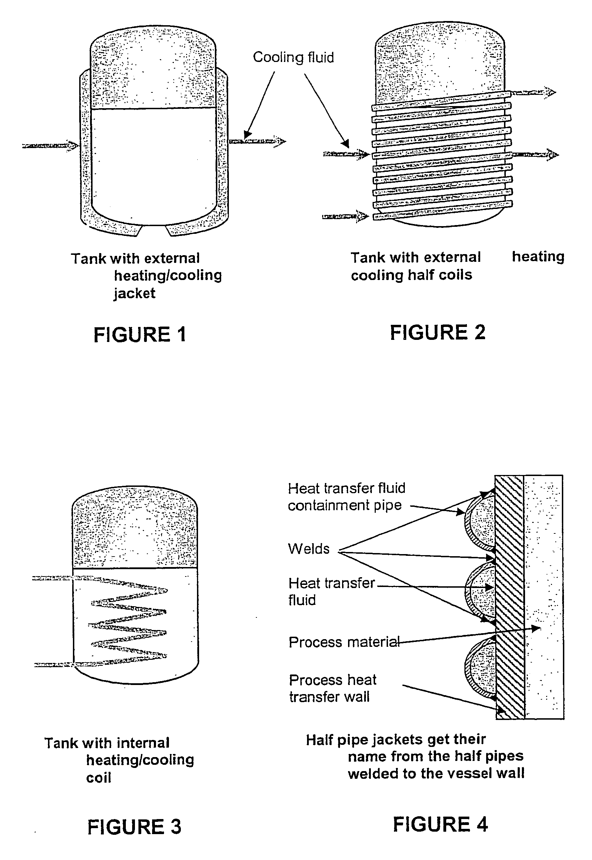

Conventional jackets heat exchangers employ (as illustrated in figure 1), external half coils (such as those illustrated in figures 2 & 4) and internal coils (as shown in figure 3). These heat exchanger systems are designed on the principle that heat transfer fluid turbulence should be maximised for good distribution and transmission of heat. In order to achieve this, excess volumes of heat transfer fluid are passed through the heat exchanger.

The traditional design approach for heat exchangers has been to expose the process material to a surface behind which is a large bath or large plugs of turbulent heat transfer fluid. The present invention on the other hand is based on using multiple thin films or thin tubes of heat transfer fluid. According to the invention the flow paths of the heat transfer fluid are relatively short and the residence time is also short

The concept of the present invention described herein has superfinite similarities to bolt on or clamp on jackets, sometimes referred to as "limpet jackets". The key difference of the present invention is that whilst the limpet jackets deliver compromised heat transfer capabilities, the design of the present invention delivers substantially enhanced heat transfer capabilities.

The present invention which embodies the reduced volume concept enables different design principles to be employed. A greater number of smaller heat transfer conduits are used for delivering heat transfer fluid to the process heat transfer surface (or directly to the process material in the case of internal pipes, coils or plates). We have found that considerable benefits can be realised using these techniques.

We have found that the reduced volume design usually (but not always) contains conduits for the heat transfer fluid rather than half coils or jackets. In addition the use of external jackets or conduits provides for the designer, the freedom to pick a material for containment of the heat transfer fluid. This has the benefit that a fully contained pipe or conduit does not have to be welded to the surface of the heat exchanger to maintain good containment integrity (of the heat transfer fluid) and a variety of attachment techniques such as glue, solder, clamps or guides can be used. Thus a material like copper having higher thermal conductivity can be used to deliver heat to the heat transfer surface irrespective of the process material. Because the conduits (carrying the heat transfer fluid) are small and made of a conductive material, heat can be usefully transmitted from the heat transfer fluid over the full wetted perimeter of the conduit. Good heat transfer at the process heat transfer surface can therefore be achieved by even distribution of the conductive heat transfer conduits. The present invention therefore provides exchangers which are easier to build and which offer better performance in a variety of ways.

The design techniques described here can be applied to systems which use heat transfer fluids which are either liquid, gaseous or a mixture of liquids and gases. It is particularly relevant however to systems using liquid or gaseous heat transfer fluids.

The present invention therefore provides a method for designing heat exchangers with reduced hold up volumes of heat transfer fluid; the use of this smaller amount provides the following benefits:

•   a more reliable measure of heat balance is possible since the temperature change of the heat transfer fluid is large and therefore easier to measure. This provides valuable and accurate information about the rate and progress of any operation which liberates or absorbs heat. The effects of thermal change within the heat transfer fluid are also reduced;

- a small inventory of heat transfer fluid with a comparatively short flow path can be replaced more quickly leading to improved temperature control;
- better transmission of heat from the heat transfer fluid to the heat transfer surface is possible with the reduced volume design;
- better distribution of heat transfer fluid is possible due to the use of multiple small pipes.

In a first embodiment the present invention therefore provides a heat exchanger for delivery of heat transfer fluid to a process heat transfer surface according to claim 1.

It is preferred that the heat transfer fluid have a relatively short residence time in the conduits. We prefer that this residence time in seconds is not greater than twice the length of the heat transfer surface as measured in metres.

The key to this design can be summarised in the following statements:

- the heat transfer fluid is delivered to the heat transfer surface in multiple small elements. Typically a single element would not carry more than 20% (and in many cases much less) of the total heat transfer fluid.
- there is no need to maximise turbulence in the heat transfer conduit in order to achieve good transmission of heat between the heat transfer fluid and the process material. Most reduced volume heat exchangers of the present invention operate with the heat transfer fluid flowing under laminar conditions (although it can be turbulent in some cases).
- maximising turbulence in the heat transfer conduit is not a design requirement for achieving good distribution of heat transfer fluid.
- the heat transfer fluid may be carried within a fully contained conduit or pipe and, this pipe or conduit may be of an entirely different material to the containment wall for the process material particularly where the heat transfer element is an external heat transfer element. This can avoid the time consuming and costly welding required when half coils are used as external heat transfer elements.
- where external heat transfer elements are used, the heat transfer fluid conduit wall may be used to enhance the efficiency of heat transmission and maintain even distribution of heating or cooling.
- in the case of external heat transfer elements, the full hydraulic perimeter of the containment conduit for the heat transfer fluid is used for transferring heat to and from the heat transfer fluid.
- the shape of the containment conduit for the heat transfer fluid can be modified to increase the heat transfer area between the conduit and the heat transfer fluid.
- each heat transfer element may be sized such that, at maximum heating or cooling load, the heat transfer fluid undergoes a significant temperature change (typically greater than 1°C) whilst flowing at a comparatively high linear velocity (typically 0.5 to 5 m.s$^{-1}$). In many cases this temperature change will be >3°C.

In a further embodiment of the present invention which employs external heat transfer elements which are of different material to the process containment vessel, the design can be developed to allow for differential expansion due to changes in temperature and/or pressure of the heat transfer surface and the conduit carrying the heat transfer fluid. The invention therefore provides techniques whereby stress problems created by differential expansion can be overcome by the use of thermally conductive expansion plates as described herein below. PCT/EP02/09956 and GB 2374 948 describe a design for variable area heat exchangers. The heat transfer surfaces described in those patents are broken up into multiple separate elements. In sizing individual heat transfer elements, the linear velocity and the temperature change of the heat transfer fluid passing through the heat transfer element are important design criteria. By using a multi element variable area heat exchanger, these earlier patents are concerned with more effective use of heat transfer fluid. It was also shown that such heat exchangers offer (amongst other things) more accurate heat measuring capabilities and better temperature control.

The present invention exploits the concept of multi-element heat exchangers to achieve reduced hold up volumes of heat transfer fluid. As with the variable area design, specified values of temperature change and velocity of the heat transfer fluid are design requirements. Unlike the earlier variable area design however, the present invention regulates the log mean thermal difference (between the process material and the heat transfer fluid) to control temperature. In the design of the present invention the full heat transfer area or large sections of heat transfer area carry a continuous flow of heat transfer fluid. In the design of the present invention, the prime purpose of using multiple elements is to provide good heat transmission and even distribution of heating or cooling fluid whilst maintaining small hold up volumes of heat transfer fluid.

On very small heat exchangers, some of the design criteria of the present invention are less easy to differentiate from those of the traditional systems. For example a very small heat exchanger will usually have laminar flow by default.

However even on these very small heat exchanger systems some of the key design criteria of the present invention enhance the performance of the heat exchanger. The most important being the division of the delivery of the reduced volumes of the heat transfer surface into multiple elements.

On large heat exchangers, the differences between the present invention and conventional designs are very clear cut. Although some reactors use multiple heat transfer elements they are used for different reasons. In some existing systems, separate heat transfer elements are used to allow different sections of the equipment to be heated or cooled separately. In other cases, the heat transfer elements are broken up to reduce the temperature change of the heat transfer fluid. In the reduced volume design, one of the design objectives is the very converse of this. The heat transfer surface is broken up so as to give a comparatively large temperature change in the temperature of the heat transfer fluid.

The amount of heat which can be transmitted by a heat exchanger is determined by the equation:

$$q = U.A.LMTD$$

Where q = heart transmitted (W)
U = heat transfer coefficient (W.m$^{-2}$.K$^{-1}$)
A = the heat transfer area (m$^2$)
LMTD = temperature difference between heat transfer fluid and process material (K)

The components of this equation and their implication for heat exchanger design are discussed below.

The heat transfer coefficient (U) defines the ease with which heat can be transmitted between the heat transfer fluid and the process material.

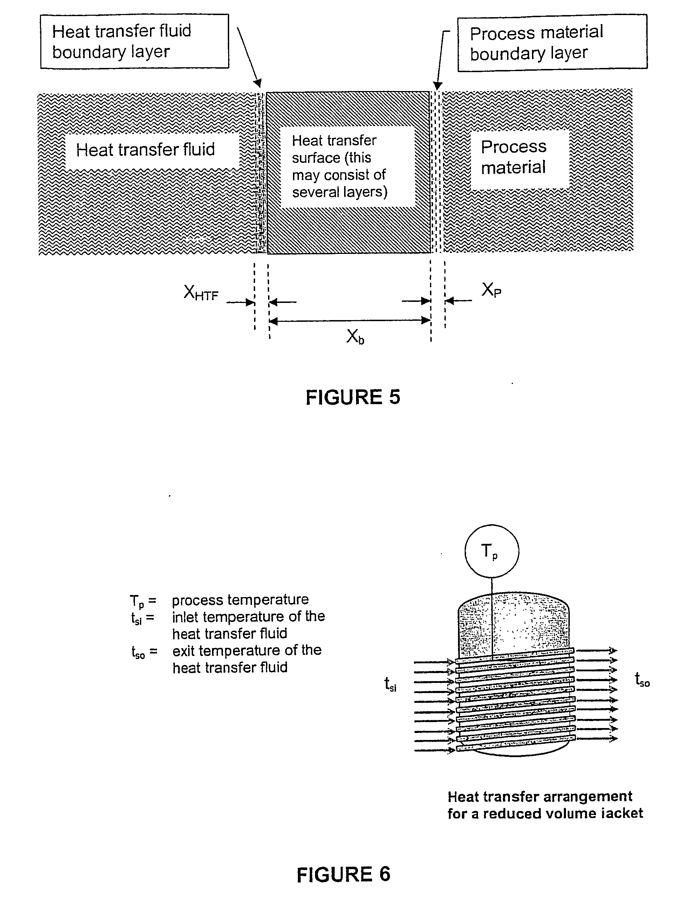

Figure 5 shows a heat transfer surface between two fluids. For good heat transmission, the heat transfer surface ($X_b$) in Figure 5) should be as thin as possible and have high thermal conductivity. In practice however wall thickness and choice of material are usually governed by the need to maintain adequate mechanical strength and resistance to chemical attack.

Boundary layers lie at the interface between the heat transfer fluid and the conduit and between the process material and the heat transfer surface. In these boundary layers, virtually no mixing occurs and heat has to cross by conduction. The thickness of the boundary layers ($X_{HTF}$ and $X_p$ of Figure 5) reduces as the turbulence in the respective bulk fluids increase. Thin boundary layers have reduced resistance to heat transmission. Traditionally, large heat exchangers promote high turbulence to reduce the thickness of the boundary layer.

The amount of heat that can be transferred is directly proportional to the area of the heat transfer surface available (A). Folded surfaces offer greater heat transfer area but the scope for this is limited for many applications. Ease of cleaning and the need to avoid stagnant pockets are key design considerations. In some cases however limited profiling is used (such as dimples or ribs) to increase heat transfer area (this can also help to promote turbulence).

The amount of heat that can be transferred is directly proportional to the difference in temperature between the process material and the heat transfer fluid. The average of the temperature difference between the respective materials is referred to as the Log Mean Thermal Difference (LMTD). Variation of the LMTD is used as the temperature control parameter in fixed area heat exchangers whereas variable area heat exchangers such as those described in PCT/EPO2/09956 and GB 2374948, the LMTD can be kept substantially constant.

In conventional heat exchangers the size and shape of jacketed vessels are largely determined by functional requirements such as product capacity needs, the need for uniform agitation within the process material, velocity control within the process material and ease of cleaning. For these reasons many heat exchangers have relatively simple internal geometry. The heat transfer surface is often formed around the outer surface of the vessel. In some cases, one or more internal coils or plates are fitted.

The designer seeks to maximise the heat transfer capacity by improving the heat transfer coefficient. In conventional large heat exchangers, this is achieved by maximising turbulence. A measure of how turbulent a system is can be related to the Reynolds number as follows:

$$Re = \rho.v.d/\mu$$

Where Re = Reynolds number [dimensionless]
$\rho$ = Fluid density [kG.m$^{-3}$]
v = fluid velocity [m.s$^{-1}$]

$\mu$ = fluid viscosity [N.s.m$^{-2}$]

As a general rule, the flow conditions of fluids turn from laminar to turbulent at a Reynolds number of around 2000. Above 2000 turbulence tends to increase with rising Reynolds number and with this increase the boundary layer gets thinner thus reducing resistance to heat transmission. Conventional large heat exchangers maximise turbulence by increasing the liquid velocity. In the case of jacketed systems, turbulence is promoted by injecting heat transfer fluid in to the jacket at high velocity or with the use of baffles. In the case of coils or tubes, heat transfer fluid is pumped at high velocity.

The present invention on the other hand uses reduced volumes of heat transfer fluid in a manner that secures a reasonable temperature drop of the heat transfer fluid whilst keeping the fluid velocity at an acceptable high level. The heat transfer fluid flow on large systems (with a nominal heat transfer capacity of greater than 3 kW per heat transfer conduit based on a temperature rise of 5°C in the heat transfer fluid) usually has reduced turbulence with a Reynolds number of less than 10,000. On mid sized systems (with a nominal heat transfer capacity of greater than 0.1 to 3 kW per heat transfer conduit based on a temperature rise of 5°C in the heat transfer fluid) the Reynolds number is usually below 2000. On small systems (with a nominal heat transfer capacity of less than 0.1 kW per heat transfer conduit based on a temperature rise of 5°C in the heat transfer fluid) the Reynolds number is usually less than 500. It must be recognized however, that systems can deviate from the typical values shown above especially where very high pressure drops through the heat transfer conduit are used. It is generally preferable however that the pressure drop of the heat transfer fluid is not excessive (>2 bar). There are however different design considerations depending on whether the heat transfer elements pass through the process material or are wrapped around the external surface. The two cases are considered separately below.

### Reduced volume systems with external heat transfer elements

The amount of heat removed by the heat transfer fluid can be calculated from the following equation.

$$q = mCp(t_{si}-t_{so})$$

Where q = heat transfer capacity of heat exchanger (W)
m = mass flow of heat transfer fluid (kg. s$^{-1}$)
Cp = specific heat of heat transfer fluid (J.kg$^{-1}$.K$^{-1}$)
$t_{si}$-$t_{so}$ = temperature change of heat transfer fluid (K)

Where $t_{si}$ is the temperature of the heat transfer fluid on entry unto the heat exchanger and $t_{so}$ is the temperature of the fluid on exist from the heat exchanger.

In the reduced volume system of the present invention, the linear velocity and the temperature change of the heat transfer fluid are key design parameters. The velocity and temperature change of the heat transfer fluid ($t_{si}$-$t_{so}$) are preferably as large as is reasonably practical. In addition to this, it is preferable to use the lowest acceptable design heat load. Some of the design considerations which arise from these objectives are considered below.

### Consideration 1: The design heat load ($q_{des}$)

The design heat load will be based on the nominal maximum heat load of the process whose temperature is to be controlled. If the equipment is used for multiple purposes, this will be based on the process operation which has the highest heat load. For example biological processes tend to have a lower maximum heat load than chemical processes. In some cases the design heat load may be based on emergency conditions. It should be noted that some systems can be designed on the basis that short term peak heat loads may be higher than the maximum steady state cooling capacity of the system. In this type of case, a design heat capacity which is smaller than the peak process heat capacity can be beneficial since it will require a smaller inventory of heat transfer fluid. The design heat load is referred to as $q_{des}$.

It is good practice to choose a $q_{des}$ which is larger than the absolute value of the maximum heat load. This additional safety margin allows for errors in calculation or unforeseen operating conditions.

### Consideration 2: The heat transfer fluid temperature rise ($t_{si}$-$t_{so}$),

The maximum acceptable value of heat transfer fluid temperature rise ($t_{si}$-$t_{so}$), should be established bearing in mind the operating conditions and capabilities of the system.

The heat transfer coefficient (U) needs to be established. The U value defines how easily heat can be transmitted between the process material and the heat transfer fluid. This can be calculated using standard heat transfer theory but is most easily taken from test data or historical data.

The nominal area of the heat transfer surface (A) of the heat exchanger needs to be established. For the purposes of this description, this can be based on the heat transfer area in contact with the process material. It should be noted that this is not the true heat transfer area since the heat transfer area in contact with the heat transfer fluid is likely to be different to the heat transfer area in contact with the process material.

Thus using $q_{des}$, U and A, the design value for the log mean thermal difference can be determined as follows:

$$q_{des} = U.A.LMTD_{des}$$

Where $q_{des}$ = the maximum process heat load (W)
$U$ = the heat transfer coefficient (W.m$^{-2}$.K$^{-1}$)
$A$ = the nominal heat transfer area (m$^2$)
$LMTD_{des}$ = Design log mean thermal difference (K)

The $LMTD_{des}$ can now be used to establish a design value for the heat transfer fluid temperature change ($t_{si}$-$t_{so}$). The LMTD is the true average difference between the heat transfer fluid temperature and the process temperature and is calculated from the following formula:

$$LMTD = [(T_p\text{-}t_{si})\text{-}(T_p\text{-}t_{so})]/ln[(T_p\text{-}t_{si})/(T_p\text{-}t_{so})]$$

Where $T_p$ = process temperature and is generally fixed
$t_{si}$ = inlet temperature of the heat transfer fluid
$t_{so}$ = exit temperature of the heat transfer fluid

as illustrated in Figure 6.

By testing different values of $T_p$-$t_{si}$, alternative values of $t_{si}$-$t_{so}$ can be found which when calculated out, give the design LMTD ($LMTD_{des}$). In this evaluation the following factors need to be considered:

- the value of $t_{si}$ must not be so high that it causes heat damage or unwanted boiling of the process material. The temperature ($t_{si}$) must also fall within the design capabilities of the system.
- the value of $t_{si}$ must not be so low that it causes cold damage or unwanted freezing of the process material. The temperature ($t_{si}$) must also fall within the design capabilities of the system.
- a high value of $t_{si}$-$t_{so}$ reduces the maximum heat transfer capacity but improves the ability to measure heat balance accurately.
- a low value of $t_{si}$-$t_{so}$ requires more pumping energy to get the heat transfer fluid through the heat exchanger.

We prefer that $t_{si}$-$t_{so}$ is in the range of 0.1 °C to 1000°C. A more normal design range of $t_{si}$-$t_{so}$ however would be between 1 °C and 20°C, preferably between 3°C and 20°C more preferably between 3°C and 15°C.

The design value of $t_{si}$-$t_{so}$ could be determined by other criteria. For example, the designer may need to measure the heat balance of the working system. If he has a temperature measuring device which is capable of measuring to $\pm$ 0.1°C, he might select a $t_{si}$-$t_{so}$ of 5°C on the basis that this gives a temperature measuring accuracy of $\pm$ 2%.

As a further embodiment therefore the present invention provides the use of a predetermined $t_{si}$-$t_{so}$ of a heat transfer process fluid to be employed in a heat exchanger for the design of the heat exchanger so as to reduce the hold up volume of heat transfer fluid within the heat exchanger.

In a preferred system the hold up volume is reduced to the minimum acceptable volume as determined by the nature of the heat exchanger.

**Consideration 3: The heat transfer fluid flow rate (m)**

Having determined the design heat load ($q_{des}$) and the design temperature change of the heat transfer fluid ($t_{si}$-$t_{so}$) the required rate of flow of heat transfer fluid at maximum load can be calculated from the following equation.

$$m = q_{des}/[Cp(t_{si}-t_{so})]$$

Where $q_{des}$ = design heat load
m = mass flow of heat transfer fluid (kg.s$^{-1}$)
Cp = specific heat of heat transfer fluid (J.kg$^{-1}$.K$^{-1}$)
$t_{si}$-$t_{so}$ = temperature change of heat transfer fluid (K)

The mass flow of heat transfer fluid (m) may be used as one of the factors for sizing the heat transfer elements. In practice however this is not a fixed value since it can be varied by increasing or decreasing the velocity of heat transfer fluid through the heat transfer elements. The ability to vary the velocity (and temperature) of the heat transfer fluid is useful and gives the equipment operator the freedom to vary the heat exchanger performance around a core design value.

As a further embodiment the present invention therefore provides the use of a predetermined linear velocity of the heat transfer fluid to be employed in a heat exchanger for the design of the heat exchanger so as to reduce the hold up volume of heat transfer fluid within the heat exchanger to the minimum acceptance volume.

In a preferred system the hold up volume is reduced to the minimum acceptable volume as determined by the nature of the heat exchanger.

**Consideration 4: The number of heat transfer elements (n)**

The underlying purpose of this invention is to minimise the volume of heat transfer fluid held within the heat exchanger. It is also desirable to utilise the maximum available heat transfer area. The thickness of the heat transfer fluid layer surrounding the heat exchanger can be calculated as follows:

At any time, the volume of heat transfer fluid in service is as follows:

$$V = m.r/\rho$$

Where V = total volume of heat transfer fluid (V)
m = mass flow of heat transfer fluid (kg.s$^{-1}$)
$\rho$ = density of the heat transfer fluid (kg.m$^{-3}$)
r = residence time of the heat transfer fluid (s)

The residence time (r) is calculated from the following relationship:

$$r = Z/v$$

Where r = residence time of heat transfer fluid (s)
Z = total length of each heat transfer fluid conduit (m)
v = Velocity of heat transfer fluid (m.s$^{-1}$)

Although there are aspects of Z and v which may have to be tested by iterative methods, simple criteria may often be applied. For example, on a cylindrical vessel Z will often be a simple multiple of the vessel perimeter (half, once or twice the distance of the perimeter) to make fabrication simple. The velocity may also be set in say the range of 1 to 3 m.s$^{-1}$, to deliver fast temperature control response without being so high as to incur excessive pressure drop.

Thus the thickness of the heat transfer fluid layer can be calculated as follows:

$$W = V/A$$

Where W = thickness of the heat transfer fluid layer (m)
V = total volume of heat transfer fluid (m$^3$)
A = heat transfer area (m$^2$)

The heat transfer area referred to is that which is in contact with the process material. The reduced volume concept seeks to reduce the heat transfer fluid to a thinnest possible layer (W).

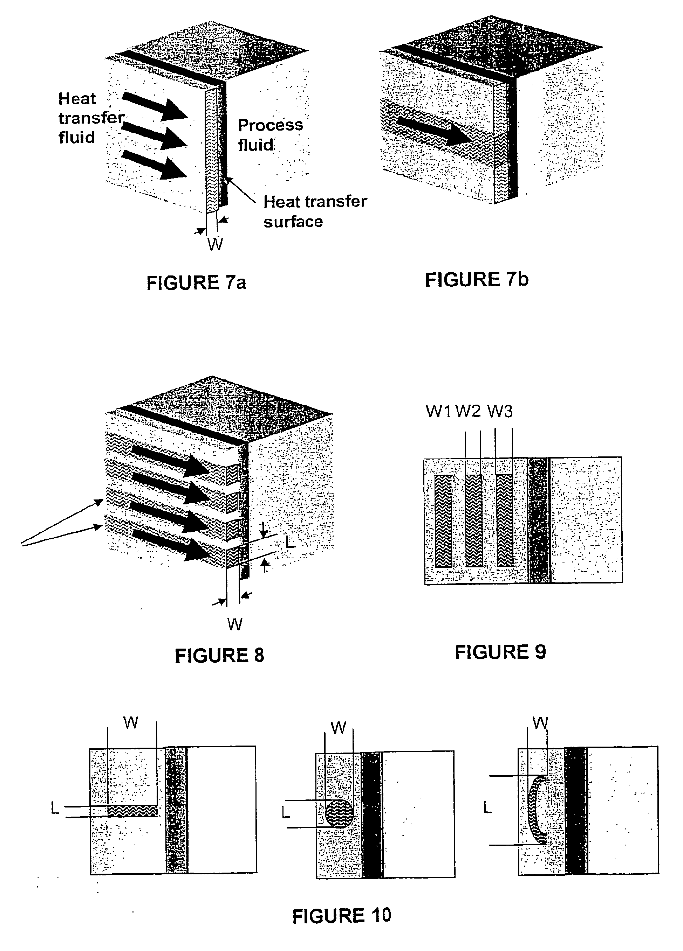

One consequence of designing a minimum volume system is that the thickness of the heat transfer fluid layer surrounding the heat transfer surface is reduced. If a single thin sheet of fluid is used however, the fluid will tend to channel and not give uniform distribution. As this layer gets thinner, problems of fluid distribution arise and the heat transfer fluid starts to channel as shown in the transition from figure 7(a) to figure 7(b).

The solution to the channelling problem is resolved by breaking up the heat transfer surface into separate channels as shown in figure (8). It is preferable that the ratio of height to width of these channels is limited such that one dimension is not more than five times the other, i.e. L is no more than five times W in the system illustrated in Figure 8.

In the full pipe version of the minimum flow design, the side walls of the conduits not in contact with the heat transfer surface also serve as conductors thus giving a second reason for a low L: W ratios. In systems where there are very small channels (<1 mm$^2$ in cross sectional area) or multiple small channels, the internal dimensions may use ratios of up to 10 : 1 (L to W or W to L) where multiple conduits are arranged in parallel as illustrated in Figure 9, L can be 10 times W or less. In this case, W is calculated as follows:

$$W = W1 + W2 + W3 \ldots\ldots..$$

depending on how many elements are used.

This relationship applies irrespective of the shape of the conduit and three different shapes of conduit are illustrated in Figure 10.

There will be different ways of determining the number of heat transfer conduits according to the geometry and layout of the heat transfer surface. In the case of a cylindrical vessel (with heat transfer conduits only on the cylindrical side), with conduits around the cylinder of one full turn, the theoretical minimum number of conduits would be:

$$n_{min} = H/(L-Y)$$

*Where H = height of vessel cylinder (m)*
*W = thickness of fhe heat transfer fluid layer (m)*
*Y = wall thickness of the heat transfer fluid conduit (m)*

This design process is indicative and not absolute and there is no absolute rule for the ideal number of elements since the fabrication method chosen will have a significant impact on how the elements are assembled and how they perform. There are, however, some general considerations to take into account:

- larger systems require a greater number of elements.
- the elements need to cover adequate heat transfer surface area in contact with the process material.
- as a general rule, a larger number of elements will permit better distribution of heat transfer fluid and better transmission of heat.
- if the number of elements is too large, their individual flow capacities will reduce to a point where blockage can be a problem.

The number of elements used on a system can vary from 5 to many thousands. A typical number however will vary from 5 to 200 depending on the size of the system, prefered systems contain for 10 to 200, most preferably 10 to 100, most preferably 10 to 50 elements.

The design process may be iterative and the number of elements chosen may need to be reconsidered several times during the design process.

**Consideration 5: The heat transfer element cross-section (d)**

High linear velocities (of heat transfer fluid) are desirable as they give small hold up volumes of heat transfer fluid. They also improve the response time for temperature control.

Having specified a design value for the linear velocity, the cross sectional area of flow can be calculated from the following equation

$$a_e = m/[v.\rho.n]$$

Where $a_e$ = cross sectional area of flow path ($m^2$)
m = mass flow of *heat transfer fluid* ($kg.s^{-1}$)
v = linear velocity of heat transfer fluid through the conduit ($m.s^{-1}$)
$\rho$ = density of heat transfer fluid ($kg.m^{-3}$)
n = number of elements used

If the heat transfer element were circular, this would give an internal pipe diameter of:

$$d = [4a_e/\Pi]^{1/2}$$

Where d = Internal diameter of heat transfer element (m)
$a_e$ = cross sectional area of flow path ($m^2$)

In practice, the conduits carrying the heat transfer fluid may have a variety of different cross sectional shapes.
The cross sectional area is dependent on the size of the heat transfer surface and the heat load it is required to carry it should however be less than 2000, preferably less than 1300, more preferably less than 500, more preferably less than 80 and in some instances less than 20 perhaps less than 1 square millimetre.
Linear velocities of between 0.01 $m.s^{-1}$ and 10 $m.s^{-1}$ can be used for design purposes in liquid cooled systems. In practice however very low velocities are undesirable as they yield large hold up volumes in the heat transfer conduit. The use of large volumes also increases the response time for temperature control which is undesirable. Very high velocities can also present problems as they create high pressure drops through the heat transfer element which can put too high a load on the pumps that deliver the fluid. A typical system will be designed for linear velocities of between 0.5 $m.s^{-1}$ and 5 $m.s^{-1}$. In the case of systems heated or cooled by gas, the maximum range can vary from 0.1 $m.s^{-1}$ and 100 $m.s^{-1}$ but a typical range will be 2 $m.s^{-1}$ to 20 $m.s^{-1}$. It is preferred that the pressure drop across the heat transfer element be no greater than 10 bar and is preferably in the range 0.5 to 5 bar.

**Consideration 6: The heat transfer element length (Z)**

Once the cross sectional areas for the heat transfer elements have been established, the optimum lengths can be determined. Each heat transfer element has an optimum heat carrying capacity. If the element is too short, the heating/cooling capacity of the heat transfer fluid will be under utilised. If the heat transfer element is too long, the heat carrying capacity of the element will be insufficient for the heat transfer area covered.
The nominal heat transfer capacity of each heat transfer element may be calculated as follows:

$$q_e = q_{des}/n$$

Where $q_e$ = nominal heat transfer capacity of each element (W)
$q_{des}$ = design heat load for the system (W)
n = number of heat transfer elements used.

Each heat transfer element has to cover a specific area of heat transfer surface. This area is calculated as follows:

$$A_e = q_e/U.LMTD_{des}$$

Where $A_e$ = area covered by the heat transfer element ($m^2$)
$q_e$ = nominal heat transfer capacity of each element (W)
U = the heat transfer coefficient ($W.m^{-2}.K^{-1}$)
$LMTD_{des}$ = design log mean thermal difference (K)

As an approximation, the nominal width (w) of the heat transfer element can be taken as the distance between the centre line of one heat transfer element and the centre line of the next heat transfer element. From this, the nominal length of the element can be calculated as follows:

$$z_e = A_e/w_e$$

*Where* $zl_e$ *= length of each heat transfer element (m)*
$A_e$ *= nominal heat transfer area of each element (m²)*
$w_e$ *= nominal width of each heat transfer element (m)*

Once the length of the heat transfer element has been established, the pressure drop should be checked by conventional calculation methods. If the pressure drop is too high, the calculation may need to be repeated with a larger cross sectional flow areas and/or different flow path lengths. This may in turn lead to choosing a different number of heat transfer elements. The evaluation process may require a number of iterations. In many cases it will be preferable to start with a nominated length of heat transfer element as one of the design criteria.

For external heat transfer conduits, the maximum effective path length of a heat transfer conduit is preferably less than twice the length of the heat transfer surface and more preferably is approximately equal to the heat transfer surface of the heat exchanger.

In the case of a cylindrical vessel, the length of the heat transfer surface is:

$$P = \pi.D$$

Where D = diameter of the cylinder
p = 3.1416
P = perimeter of heat exchanger

This gives a maximum residence time of:

$$r = D/v$$

Where r = residence time (s)
D = diameter of the cylindrical vessel (m)
V = linear velocity of the heat transfer fluid (m.s⁻¹)

On the basis that the preferred minimum velocity is 0.5 m.s⁻¹, this limits the residence time of heat transfer fluids in reduced volume systems. Thus, the maximum residence time for a 3 metre diameter cylindrical vessel with a single loop would be approximately 19 seconds with a fluid velocity of 0.5 m.s⁻¹. With a preferred linear velocity of say 2 m.s⁻¹, the residence time would be under 5 seconds. Typically the residence time of heat transfer fluid in a reduced volume heat exchanger will be from 0.1 to 5 seconds according to the size of the system. Very small (under 1 litre) and very large systems (such as cylindrical vessels of greater than 5 metre in diameter) may have residence times above and below the typical value described above. The heat transfer conduits area generally arranged so as to lie parallel with the hydraulic plane selected. In other shapes of vessel, a different plane may be chosen to define the length of the heat transfer surface. The plane which is used to define the length of the heat transfer surface however must have sufficient length to ensure efficient heat transfer without an unmanageably large number of heat transfer conduits. In some cases such as narrow pipes the conduit may be wrapped in such a was as to be more than twice the length of the heat transfer surface.

The length of the heat transfer surface varies according to the geometry of the vessel with which it is used. In the case of a cylindrical vessel the length may be the perimeter or the height of the cylinder, in the case of a conical vessel the length may be the perimeter of an upper portion of the cone. In the case of a square of rectangular vessel the length is the surface with which the conduit is in contact.

The residence time of the heat transfer fluid depends upon the size of the system but it should be from 0.01 to 100 seconds. In small systems where the transfer surface is not greater than 10 metres in length, preferably the residence time of heat transfer fluid is less than 6 seconds, preferably less than 5 seconds and more preferably less than 4 seconds, most preferably less than 3 seconds and is in the range 0.01 to 6 seconds.

Under these conditions different cross sectional areas and internal profiles of the heat transfer element need to be tested to find the optimum hydraulic design. Developing the design on the basis of defined lengths of heat transfer element can simplify the mechanical. If for example, each element covers half, one or two full loop of a cylinder; the manifolding will be simpler and neater.

**Consideration 7: Other calculation considerations**

The methodology described above has been simplified for the purpose of setting out the key design objectives. In practice more rigorous methods can be used to good effect. For example, in the method shown, the U value was assumed and the area was based on the surface area in contact with the process material. An alternative analysis would employ an incremental approach using the following equation:

$$1/UA = 1/(h_{htf}.A_{htf}) + L_c/(k_c.A_c) + L_p/(k_p.A_p) + 1/(h_p.A_p)$$

*Where UA = nominal heat transfer capacity per Kelvin $(W.K^{-1})$*
*$h_{htf}$ = heat transfer fluid coefficient $(W.m^{-2}.K^{-1})$*
*$A_{htf}$ = heat transfer area of the internal conduit wall $(m^2)$*
*$L_c$ = thickness of the conduit wall (m)*
*$K_c$ = thermal conductivity of the conduit wall $(W.m^{-1}.K^{-1})$*
*$A_c$ = Contact area between the conduit and the process wall $(m^2)$*
*$L_p$ = thickness of the process wall (m)*
*$K_p$ = thermal conductivity of the process wall $(W.m^{-1}.K^{-1})$*
*$A_p$ = Area of the process wall $(m^2)$*
*$H_p$ = Process material heat coefficient $(W.m^{-2}.K^{-1})$*

In the previous analysis it was also assumed that the wall thicknesses were consistent. In practice the thickness of the conduit ($L_c$) wall may be varied or extended to ensure that there is good continuity for transmission of heat between the heat transfer fluid and the process material. An illustration of this is shown in figures 11 and 12 where good continuity is provided between the heat transfer fluid and the process material. Figure 20 shows how this can be done even when expansion plates, as described hereafter, are employed.

Design of reduced volume systems can be an iterative process and some compromise may have to be made (e.g. $t_{si}$-$t_{so}$ and fluid velocity may not be ideal). The method described above is not therefore intended to represent a definitive or rigorous design approach but provides sufficient information to enable a design to be established. The designer may use a variety of techniques for reaching a solution; however the underlying objective is to deliver a heat exchanger which relies on much smaller inventories of heat transfer fluid than is typical for conventional heat exchangers.

It should be recognised that some systems will not require heat measurement and comparatively high values of $t_{si}$-$t_{so}$ can be tolerated. Even in these cases however, a value which is slightly higher value than might be used in a comparable conventional heat exchanger is beneficial since it serves to reduce the hold up volume within the heat exchanger with negligible loss of heat transfer capacity. By applying the reduced volume design principles, fast temperature response is achieved and a simpler fabrication method is possible.

For a fixed area heat exchanger, the ideal performance will only hold good for one set of operating conditions. Even with this compromise however, the design of the present invention will deliver a system which is simple to build and generally closer to an optimum design than most conventional heat exchangers.

**Consideration 8: Conduit design**

In most conventional heat exchangers, excess heat transfer fluid is used to achieve uniform fluid displacement and turbulence throughout the heat transfer conduit.

In the reduced volume design of the present invention, flow conditions are often laminar, particularly with small systems, and several different techniques are used to enhance the heat transfer coefficient and ensure even distribution of heating or cooling fluid.

It is desirable to use the maximum available area of heat transfer surface in contact with the process material. The heat transfer conduits need to be laid out in manner which ensures that the available area of heat transfer surface is properly covered. For this reason, shapes and materials of conduits which can be adapted to the profile of the process heat transfer wall are preferably used.

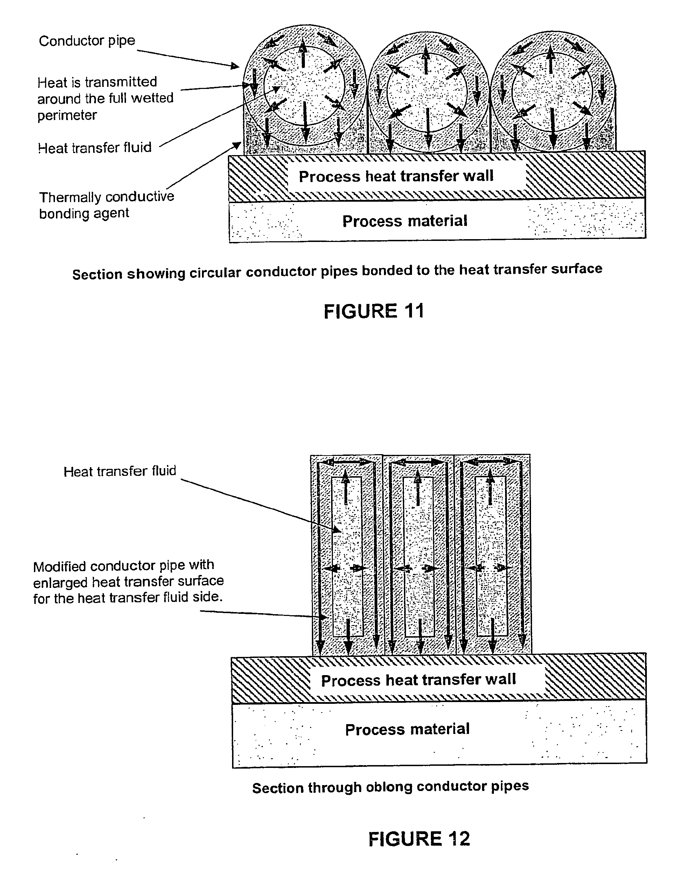

In the case of external jackets or coils, the conduits used to carry the heat transfer fluid do not need to-be compatible with the process material and are not subjected to the same thermal or mechanical conditions as the process. In these circumstances, a material of high thermal conductivity like copper makes an ideal conduit material and has a thermal conductivity which can be more than 20 times greater than that of stainless steel. Because the conduits are comparatively small, the entire internal wetted surface of the heat transfer fluid conduit can be used to transmit heat between the heat transfer fluid and the process heat transfer wall. Because the conduits carrying the heat transfer fluid have to conduct heat across their walls, they are referred to as conductor pipes. Whilst it is desirable to fabricate conductor pipes in conductive material, less conductive materials can be made to work well by virtue of their small size and adaptable shape. Figure 11 shows external conductor pipes. In some cases (such as for accurate calorimetry in variable area systems), it may be preferable to have an air gap or insulation between the individual heat transfer elements.

For external conductor pipes, a further increase in the heat transfer area (for the heat transfer fluid) can be achieved by using conductor pipes with an oblong profile as shown in figure 12.

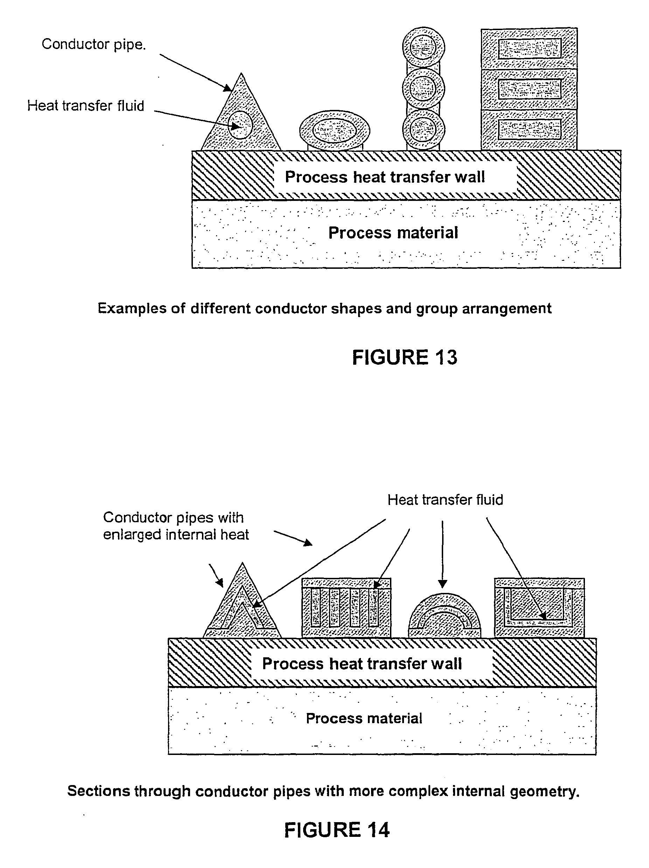

Figures 11 and 12 show single conductor pipes with circular or rectangular cross sections. In practice however a variety of shapes and groups of conductor pipes can be used to optimise the contact area between the heat transfer fluid and the conductor pipe whilst maintaining good mechanical strength. Some examples are shown in figure 13.

The internal profile of the conductor pipe can also be modified in other ways to give an enhanced heat transfer area as shown in figure 14.

Additionally the heat transfer performance can also be improved by the addition of dimples, knurling or other surface enhancement to the inner conduit wall.

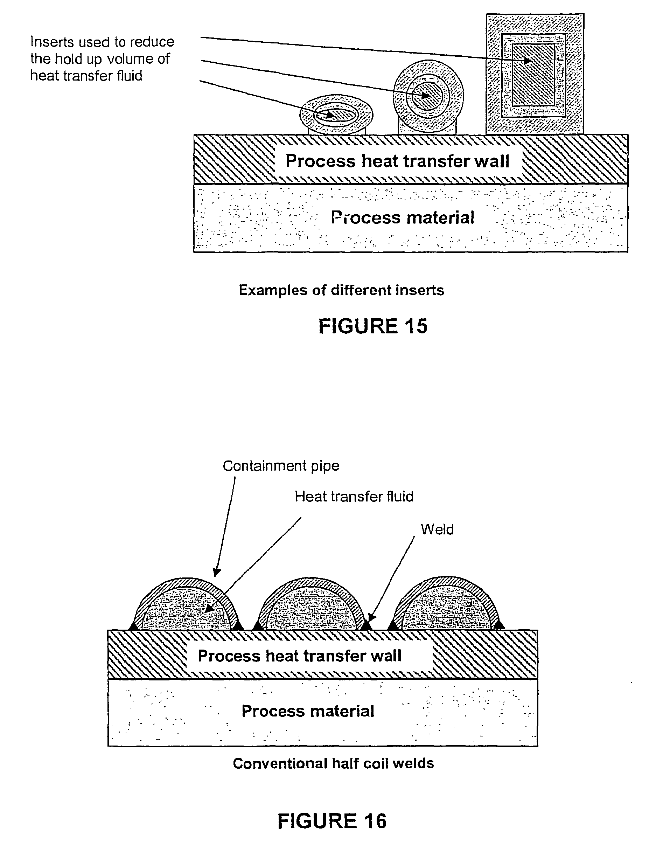

Inserts can be used to good effect in reduced volume systems (as shown in figure 15). Smooth inserts can be used to reduce the internal hydraulic volume of the conductor pipe. This allows a larger conduit to hold a reduced volume of heat transfer fluid. By using different diameters of inserts, common pipe sizes can be used for multiple flow duties. Larger conduits with removable inserts can also be used to make cleaning easier. Profiled inserts (such as flow disrupters) can also be used to promote mixing and improve heat transfer conditions at the boundary layer.

**Consideration 9 Assembly of the heat transfer conduits**

External heat transfer elements can be fixed to the process heat transfer surface by a variety of methods. Reduced volume jackets can be fabricated in the same manner as traditional half coil designs as shown in figure 16.

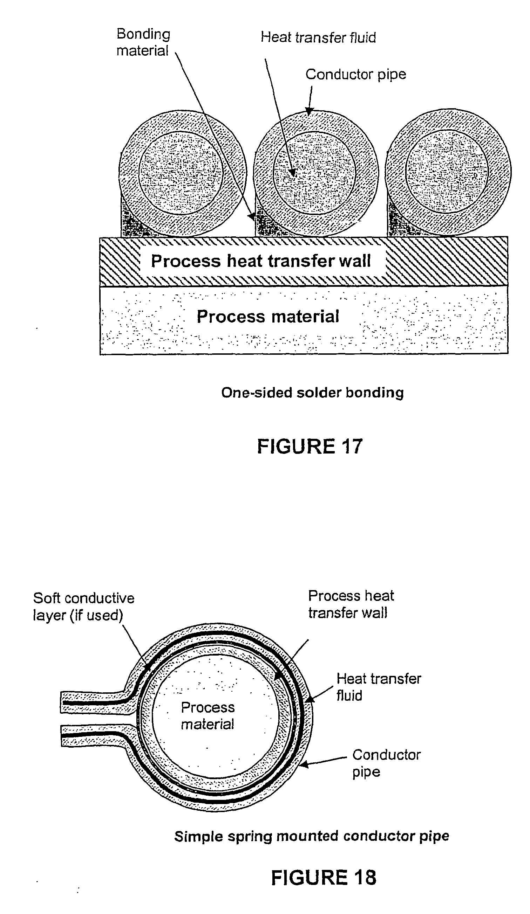

Whilst conventional fabrication techniques can be used, they can be labour intensive for fabrication and may not deliver the optimum thermal performance. A preferred solution is to use fully contained conductor pipes as shown below. These pipes can be fixed to the heat transfer surface using adhesive, solder, brazing or welding. It is preferable that the bonding agent has good thermal conductive properties. The contact area between the heat transfer conduit and the heat transfer surface can be as small or large as the designer deems necessary. The example in figure 17 uses bonding material on one side of the conductor pipe.

Alternatively conductor pipes can also be sprung or clamped onto the heat transfer surface as shown in the figure 18 (clamping arrangement not shown). The heat transfer capacity can be enhanced by filling the air space between the conductor pipe and the heat transfer surface with a soft conductive layer such as conductive paste, fluid, conductive wool, or conductive matting. Composite layers could also be used such as copper wool impregnated with conductive grease.

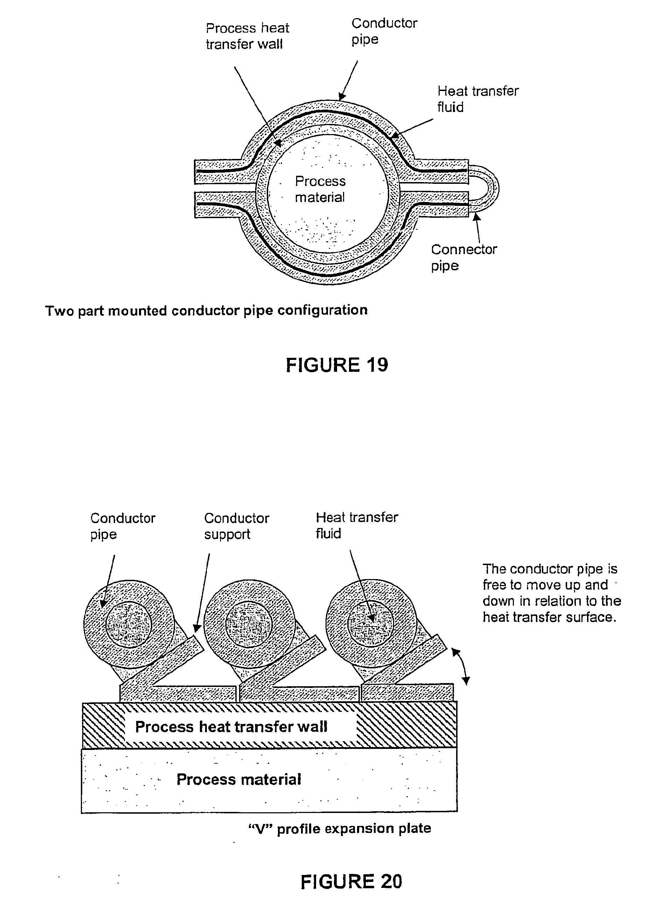

Conductor pipes can be fabricated in several sections as shown in the illustration below. The conductor pipes can be held in place by springs or clamps (not shown). As with the system illustrated in Figure 18 a soft conductive layer can be used to fill the air gap, Figure 19 shows a two part mounted conductor pipe configuration.

Another aspect of the present invention provides a method to reduce or avoid problems of differential expansion and/or contraction due to changes in temperature and/or pressure which can cause stress if the conductor pipe is of a different material to the heat transfer surface. According to the invention this problem can be overcome by using expansion plates to link the conductor pipe to the heat transfer surface. The use of an expansion plate allows the conductor pipe to expand at a different rate and/or to a different extent to the heat transfer surface. It is preferable (but not always essential) that expansion plates are fabricated in materials that have good thermal conductivity properties. An example of an expansion plate is shown in figure 20.

The present invention therefore further provides a heat transfer system for the transfer of heat between a process fluid and a heat transfer fluid across a heat transfer surface comprising a heat transfer conduit for passage of the heat transfer fluid attached to an expansion plate said expansion plate being in contact with the heat transfer surface said expansion plate enabling independent movement of the heat transfer conduit and the heat transfer surface.

With the system shown in Figure 20 the conductor pipe is free to move up and down in relation to the heat transfer surface.

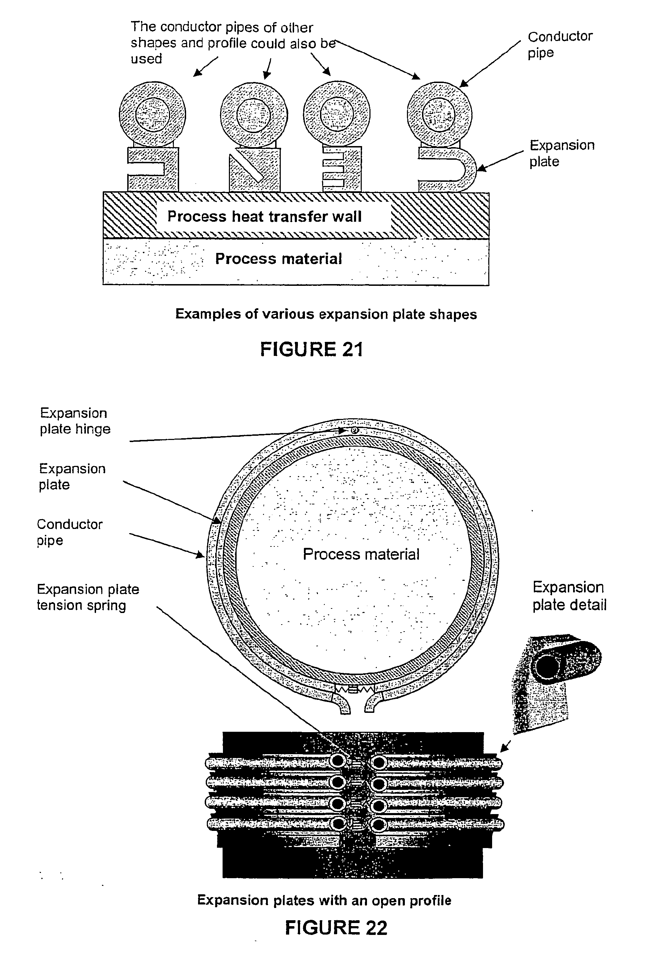

The expansion plates for the conductor pipes can be made into a variety of shapes to accommodate compact construction methods. For example they can be wedge shape, notched or chamfered as shown in Figure 21. An example of a slightly different expansion plate is shown in figure 22.

The expansion plate can be made up in several sections with the conductor pipe clamped, welded, braised, bonded or soldered to it.

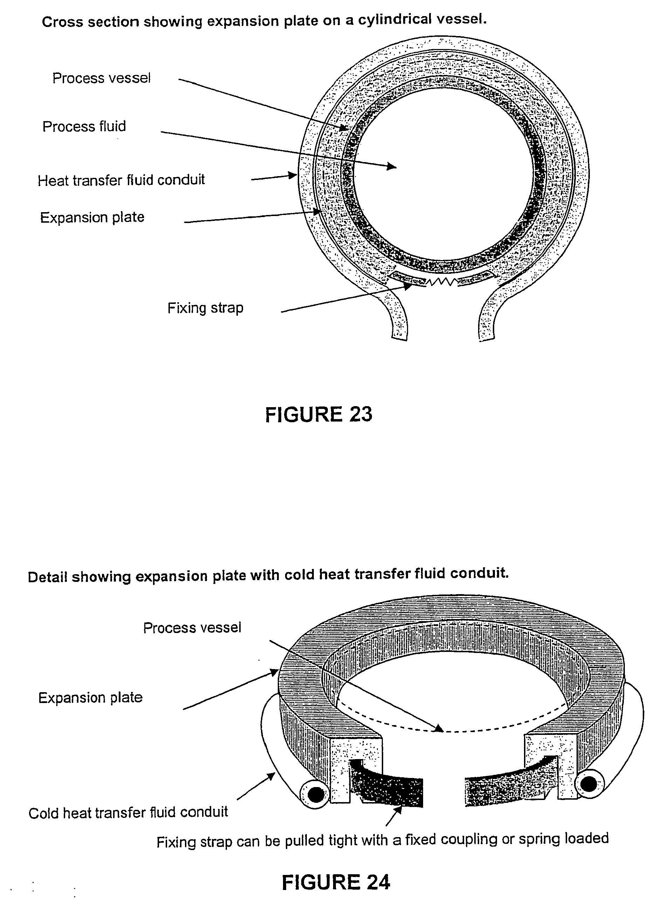

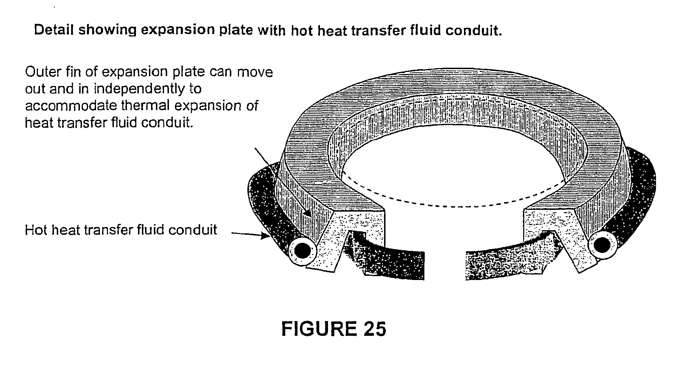

In a further embodiment of the present invention the heat transfer element is mounted on an expansion plate and the expansion plate itself is provided with a channel. The channel in the expansion plate being adapted to receive a band which can hold the expansion plate against the surface of the process vessel. In this way the expansion plate may be placed against the surface of the process vessel, the band inserted and tensioned so as to force the expansion plate against the surface of the vessel and hold the heat transfer element in place against the surface of the vessel. In this way, good transmission of heat between the heat transfer fluid and the process material may be accomplished whilst the expansion plate is free to alter its configuration independently of the process vessel as the temperatures and/or pressures increase or decrease and there is differential expansion due to the different coefficients of expansion of the process vessel and the heat transfer element. Such a system is illustrated in Figures 23 to 25 in which Figure 23 shows a heat transfer element material on an expansion plate provided with a slot. Figure 24 shows the heat transfer element of Figure 23 mounted on the process vessel with the metal band fixing strip in place to hold the expansion element against the surface of the process vessel. Figure 25 shows how the heat transfer element of Figure 23 can move away from its position in Figure 24 due to the independent expansion of the expansion plate.

The use of such a system also makes reactor construction and assembly much easier in that welding, soldering or the use of adhesives is not required to fix the heat transfer elements to the process vessel. In addition the heat transfer elements can be easily replaced if necessary perhaps because of damage or the need to change the size or nature of the heat transfer element.

**Consideration 10 Maintaining uniform flow in the heat transfer conduits**

In the system of the present invention even distribution of the heat transfer fluid to the multiple heat transfer elements is generally desirable. For example, if a system has 10 heat transfer elements of similar size and length, it would be desirable for each element to receive about 10% of the flow of heat transfer fluid. The flow characteristics of similar elements can be different however due to small variations arising during fabrication.

However, it is preferred to prevent major flow variations. This can be accomplished by providing a regulating valve to each heat transfer element. In this way the flow characteristics can be adjusted for each conduit by adjusting the valve setting. Alternatively a restriction orifice can be fitted to each conduit such that the restriction through the orifice is large in comparison to the flow resistance of the conduit. Flow restrictors with similar pressure drop characteristics are simple to fabricate and are easy to change. This makes the pressure drop variations between the different conduits small in relation to the orifice resistance, thus giving substantially constant pressure drop characteristics on all elements of similar size and type.

Some systems may have different lengths and sizes of heat transfer element and in this instance the same flow balancing techniques can be applied although the valves or restrictors may be set differently for different heat transfer elements.

**Reduced volume designs with internal heat transfer elements**

The description above illustrates design and fabrication methods where the heat transfer elements are fixed to the external surface of the equipment. The present invention may also be applied to systems where the heat transfer fluid conduit passes directly into the process fluid (such as internal coils or plates).

For internal systems, a reduced hold up of heat transfer fluid is also desirable and this is achieved by using multiple internal heat transfer elements rather than one or a few large coils. For internal heat transfer elements, the same design criteria apply as described above in relation to external heat transfer elements. The analysis is made simpler however by the fact that the conductor pipe is in direct contact with the process material. Fabrication is also different as the conductor pipes are free to expand and contract and do not have to be fixed in place other than for mechanical support; expansion plates may not therefore be required.

The following benefits are realised through use of the systems of the present invention employing external and/or internal heat transfer elements.

1. Heat balance may easily be measured because with a process held at constant temperature, the heat gained or lost by the process material is the same as the heat gained or lost by the heat transfer fluid. When using the techniques of the present invention the heat gain or loss of the heat transfer fluid can be determined by measuring the inlet and outlet temperature and the mass flow of the heat transfer fluid. Thus:

$$q = m.Cp(t_{si}-t_{so})$$

Where q = heat liberated or absorbed by the process (W)
m = mass flow of heat transfer fluid ($kg.s^{-1}$)
Cp = specific heat of heat transfer fluid ($J.kg^{-1}.K^{-1}$)
$t_{si}$-$t_{so}$ = temperature change of heat transfer fluid (K)

The use of reduced volume heat exchangers of the present invention give better heat balance data by virtue of having generally larger temperature changes in the heat transfer fluid (which makes measuring the temperature change easier) and having lower thermal inertia within the heat transfer fluid (changes in thermal conditions of the jacket tend to mask the true heat change within the process).
Even on systems where the process temperature can vary or there is a phase change (e.g. crystallisation or boiling) in the process material, useful heat balance data can still be extracted.
Heat balance measurement is a valuable monitoring tool for many chemical and physical processes. It can for example reveal the rate and progress of chemical reactions. This, in turn, permits the user to optimise addition rates and reaction times. In some cases it serves a valuable safety function as heat monitoring can detect the onset of runaways or accumulation of un-reacted material. Heat monitoring can also be used to monitor and control a variety of other processes such as crystallisation, cell growth systems and drying.

2. Temperature control can be improved. Good temperature control requires fast response and a key factor in fast response is the speed with which the heat transfer fluid temperature within the heat exchanger can be modified. The heat transfer elements in a reduced volume heat exchanger have comparatively short flow paths and the fluid travels as a plug through the heat transfer element. High linear velocities of the heat transfer fluid are also used. These conditions all serve to give fast temperature control response.

3. On the external conductor pipe design, the heat transfer capacity can be increased since the are of the heat transfer surface between the heat transfer fluid and the conductor pipe can be increased to a value which is greater than the process surface area in contact with the process fluid. Because the heat transfer elements are small and adaptable, they can be used to cover areas that a normal jacket or half coil could not reach (such as peripheral components attached to the vessel). The higher heat transfer capacity and better surface coverage will be of benefit where heat transfer capacity is important.
Heating and cooling capacity constraints are a common problem in many applications. In batch reactions for example, the addition rate of reactant usually has to be reduced to the point where the heat of reaction does not exceed the cooling capacity of the system. In large fermenters, external jackets are often inadequate for cooling purposes and internal coils have to be added.

4. The reduced volume design as described herein offers a very simple construction method. Reduced volume heat exchangers will be simpler and cheaper to fabricate than most comparable conventional heat transfer devices, especially those with external jackets or coils. Individual heat transfer elements are also simple to repair or replace.

5. The present invention allows for energy savings for the same degree of heat transfer through reduced volumetric flow and reduced pressure drop of heat transfer fluid through the heat transfer conduit.

5. The expansion plate concept used with external heat transfer elements according to the present invention provides the additional benefit that the heat transfer elements may be made of a different material from the process vessel without causing problems due to differential expansion of the materials. This then allows materials with high thermal conductivity, such as copper, to be used for the heat transfer elements.

6. The reduced volume concept requires less volumetric flow through the jacket than conventional heat exchangers and in many cases will also be used with reduced pressure drops (of the heat transfer fluid through the conduit). This will have the benefit of reducing the size of pipework around the heat exchanger and will contribute towards reduced energy requirements.

The reduced volume design and fabrication technique of the present invention can be used for any heat transfer application where better temperature control, better distribution of heat transfer fluid, better heat transfer coefficients or better measurement of heat balance is required. It can also be used to simplify construction of heat exchangers where external jackets or coils are used. It can also be used to save energy. This technique will deliver a better design for industrial process equipment such as reactors, dryers, mixers, fermenters, mills, cell growth vessels, filters or extruders. It can also used for direct fired equipment.

The technique can be employed on any size of system where the inventory of process material is from 1 millilitre to 100,000 litres or even larger.

This design concept can also be applied to a variety of other types of equipment which are not used within the process industries. Examples included refrigeration systems, combustion engines, hydraulic systems, heat exchangers in nuclear reactors, air craft heating and cooling systems, heating and cooling systems for ships, heating and cooling systems for road vehicles, HVAC systems etc.

The invention can be used to improve the operation of laboratory scale and commercial chemical and physical reaction systems. It can however also be used to provide considerably smaller reaction systems with comparable commercial throughput where calorimetric data permits the process to operate in continuous or semi-continuous manner. For example the invention enables reduction of reactor size by a factor of 10 and, in some instances, a factor of 100 or greater.

The invention is particular useful in the follow reactions

- batch organic synthesis reactions currently carried out in reactors of 10 to 20,000 litres.
- bulk pharmaceutical synthesis reactions currently carried out with process material quantities of 10 to 20,000 litres.
- batch polymerisation reactions currently carried out in reactors of 10 to 20,000 litres.
- batch synthesis reactions of 10 to 20,000 litres currently used for unstable materials (compounds susceptible to self-accelerating runaways)
- batch inorganic synthesis reactions currently carried out in reactions of 10 to 20,000 litres.
- evaporates, batch dryers, holding tanks, crystallisers, fermenters, cell growth vessels, mills, mixers and filters typically carried out in systems of 10 to 20,000 litres
- compressors, internal combustion engines, air conditioning systems

The techniques may also be useful in larger scale chemical and petrochemical operations.

## Claims

1. A heat exchanger for delivery of heat transfer fluid to a process heat transfer surface of a vessel to control the temperature of a process fluid comprising the vessel containing the process fluid and at least five external circumferential heat transfer conduits each having a cross sectional area for the flow path of the heat transfer fluid of less than 2000 square millimetres **characterised in that** each of said plurality of heat transfer conduits is separately supplied with heat transfer fluid and extends less than twice the length of the heat transfer surface of the vessel.

2. A heat exchange according to Claim 1 in which the heat transfer conduits extend a length approximately equal to the heat transfer surface.

3. A heat exchanger according to claim 1 or Claim 2 in which the conduits have a cross sectional area for the flow path of less than 180 square millimetres.

4. A heat exchanger according to any of the preceding Claims where the heat transfer fluid is delivered in 5 or more separate heat transfer fluid conduits where the total inventory of gas, liquid or solid to be heated or cooled within the vessel is less than 1000 litres.

5. A heat exchanger according to any of the preceding claims wherein the linear velocity of the heat transfer fluid through the heat transfer conduit is between 0.5 and 5 m.s$^{-1}$ for liquid cooled systems when the heat exchanger is operating at full design load and between 2 and 20 m.s$^{-1}$ for gas cooled systems when the heat exchanger is operating at full design load.

6. A heat exchanger according to any of the preceding claims the heat transfer fluid conduits are bonded, fused, glued, brazed, welded or soldered to the surface which serves as the containment barrier for the gas, liquid or solid which is being heated or cooled.

7. A heat exchanger according to any of the preceding claims wherein the conduits for the heat transfer fluid are mounted on an expansion plate to permit independent movement of the heat transfer conduit in relation to the containment barrier for the gas, liquid or solid which is being heated or cooled.

8. A heat exchanger according to any of the preceding claims including a valve or flow restrictor on each conduit for carrying heat transfer fluid.

9. A heat exchanger according to any of the preceding claims which uses a variable area heat transfer surface.

10. A process for controlling the temperature of a process fluid employing a heat exchanger according to any of the proceeding claims wherein the linear velocity of the heat transfer fluid through the heat transfer conduits Is from 0.5 to 20 ms$^{-1}$ and adapted so that the temperature of the heat transfer fluid changes by at least 1°C when the system is operating at design heat load.

**Patentansprüche**

1. Wärmetauscher zur Zuführung eines Wärmeträgermediums zu einer Prozesswärmeübertragungsfläche eines Behälters zur Steuerung der Temperatur eines Prozessmediums, umfassend den Behälter, der das Prozessmedium enthält, und wenigstens fünf externe umlaufende Leitungen zur Wärmeübertragung, wobei jede der Leitungen in Richtung des Strömungswegs des Wärmeträgermediums eine Querschnittsfläche von weniger als 2000 Quadratmillimetern hat, **dadurch gekennzeichnet, dass** jede der Vielzahl von Leitungen zur Wärmeübertragung getrennt mit Wärmeträgermedium versorgt wird und sich über weniger als die doppelte Länge der Wärmeübertragungsfläche des Behälters erstreckt.

2. Wärmetauscher gemäß Anspruch 1, wobei die Leitungen zur Wärmeübertragung sich über eine Länge erstrecken, die ungefähr gleich der Wärmeübertragungsfläche ist.

3. Wärmetauscher gemäß Anspruch 1 oder Anspruch 2, wobei die Leitungen in Richtung des Strömungswegs eine Querschnittsfläche von weniger als 180 Quadratmillimetern haben.

4. Wärmetauscher gemäß einem der vorhergehenden Ansprüche, wobei das Wärmeträgermedium in 5 oder mehr separaten Wärmeträgermediumleitungen zuführbar ist, wenn der Gesamtvorrat des Gases, der Flüssigkeit oder des Feststoffes, der innerhalb des Behälters heizbar oder kühlbar sein soll, weniger als 1000 Liter beträgt.

5. Wärmetauscher gemäß einem der vorhergehenden Ansprüche, wobei die lineare Geschwindigkeit des Wärmeträgermediums durch die Leitung zur Wärmeübertragung für flüssiggekühlte Systeme zwischen 0,5 und 5 ms$^{-1}$ (Meter pro Sekunde) liegt, wenn der Wärmetauscher mit der vollen zulässigen Last betrieben wird, und für gasgekühlte Systeme zwischen 2 und 20 ms$^{-1}$ liegt, wenn der Wärmetauscher mit der vollen zulässigen Last betrieben wird.

6. Wärmetauscher gemäß einem der vorhergehenden Ansprüche, wobei die Leitungen zur Wärmeübertagung auf die als Sicherheitsbarriere für das Gas, die Flüssigkeit oder den Feststoff, der geheizt oder gekühlt wird, dienende Oberfläche gebondet, aufgeschmolzen, aufgeklebt, hartgelötet, aufgeschweißt oder weichgelötet sind.

7. Wärmetauscher gemäß einem der vorhergehenden Ansprüche, wobei die Leitungen für das Wärmeträgermedium auf einer Erweiterungsplatte befestigt sind, um bezüglich der Sicherheitsbarriere für das Gas, die Flüssigkeit oder den Feststoff, der geheizt oder gekühlt wird, eine unabhängige Bewegung der Leitung zur Wärmeübertragung zu erlauben.

8. Wärmetauscher gemäß einem der vorhergehenden Ansprüche, umfassend ein Ventil oder einen Flussbegrenzer an jeder Leitung, die Wärmetauschermedium führt.

9. Wärmetauscher gemäß einem der vorhergehenden Ansprüche, der eine variable Wärmeübertragungsfläche verwendet.

10. Prozess zur Steuerung der Temperatur eines Prozessmediums, bei dem ein Wärmetauscher gemäß einem der vorhergehenden Ansprüche verwendet wird, wobei die lineare Geschwindigkeit des Wärmeträgermediums durch die Leitungen zur Wärmeübertragung zwischen 0,5 und 20 ms$^{-1}$ liegt und so gewählt ist, dass die Temperatur des Wärmeträgermediums sich um mindestens 1° C ändert, wenn das System mit der vollen zulässigen Last betrieben ist.

**Revendications**

1. Échangeur de chaleur pour distribuer un fluide caloporteur à une surface de transfert de chaleur de traitement d'une cuve pour commander la température d'un fluide de traitement comportant la cuve contenant le fluide de traitement et au moins cinq tuyaux caloporteurs circonférentiels externes chacun ayant une surface de section transversale, destinée au trajet d'écoulement du fluide caloporteur, qui est inférieure à 2000 mm$^2$, **caractérisé en ce que** chaque tuyau parmi ladite pluralité de tuyaux caloporteurs reçoit séparément un fluide caloporteur et s'étend d'une longueur inférieure à deux fois la longueur de la surface de transfert de chaleur de la cuve.

2. Échangeur de chaleur selon la revendication 1, dans lequel les tuyaux caloporteurs s'étendent d'une longueur approximativement égale à la surface de transfert de chaleur.

3. Échangeur de chaleur selon la revendication 1 ou la revendication 2, dans lequel les tuyaux ont une surface de section transversale destinée au trajet d'écoulement inférieure à 180 mm$^2$.

4. Échangeur de chaleur selon l'une quelconque des revendications précédentes, dans lequel le fluide caloporteur est distribué dans 5 ou plus de 5 tuyaux de fluide caloporteur séparés dans lesquels la quantité totale de gaz, de liquide ou de solide à chauffer ou à refroidir dans la cuve est inférieure à 1000 litres.

5. Échangeur de chaleur selon l'une quelconque des revendications précédentes, dans lequel la vitesse linéaire du fluide caloporteur à travers le tuyau caloporteur est comprise entre 0,5 et 5 m.s$^{-1}$ pour des systèmes refroidis par liquide lorsque l'échangeur de chaleur fonctionne à pleine puissance et comprise entre 2 et 20 m.s$^{-1}$ pour des systèmes refroidis par gaz lorsque l'échangeur de chaleur fonctionne à pleine puissance.

6. Échangeur de chaleur selon l'une quelconque des revendications précédentes, dans lequel les tuyaux de fluide caloporteur sont liés, fondus, collés, brasés, amalgamés ou soudés à la surface qui sert de barrière de confinement pour le gaz, le liquide ou le solide qui est chauffé ou refroidi.

7. Échangeur de chaleur selon l'une quelconque des revendications précédentes, dans lequel les tuyaux pour le fluide caloporteur sont montés sur une plaque d'expansion pour permettre un déplacement indépendant du tuyau de fluide caloporteur en relation avec la barrière de confinement pour le gaz, le liquide ou le solide qui est chauffé ou refroidi.

8. Échangeur de chaleur selon l'une quelconque des revendications précédentes, incluant une soupape d'étranglement ou un réducteur de débit sur chaque tuyau pour acheminer le fluide caloporteur.

9. Échangeur de chaleur selon l'une quelconque des revendications précédentes, lequel utilise une surface de transfert de chaleur de zone variable.

10. Procédé pour commander la température d'un fluide de traitement utilisant un échangeur de chaleur selon l'une quelconque des revendications précédentes, dans lequel la vitesse linéaire du fluide caloporteur à travers les tuyaux caloporteurs est comprise entre 0,5 et 20 ms$^{-1}$ et est adaptée de sorte que la température du fluide caloporteur varie d'au moins 1°C lorsque le système fonctionne à pleine puissance.

Cooling fluid

Tank with external
heating/cooling
jacket

**FIGURE 1**

Tank with external        heating
cooling half coils

**FIGURE 2**

Tank with internal
heating/cooling
coil

**FIGURE 3**

Heat transfer fluid
containment pipe

Welds

Heat transfer
fluid

Process material

Process heat
transfer wall

Half pipe jackets get their
name from the half pipes
welded to the vessel wall

**FIGURE 4**

Heat transfer fluid boundary layer

Process material boundary layer

Heat transfer fluid

Heat transfer surface (this may consist of several layers)

Process material

$X_{HTF}$   $X_P$   $X_b$

**FIGURE 5**

$T_p$ = process temperature
$t_{si}$ = inlet temperature of the heat transfer fluid
$t_{so}$ = exit temperature of the heat transfer fluid

$T_p$

$t_{si}$   $t_{so}$

Heat transfer arrangement for a reduced volume iacket

**FIGURE 6**

EP 1 529 191 B1

Heat transfer fluid

Process fluid

Heat transfer surface

W

FIGURE 7a

FIGURE 7b

W

L

FIGURE 8

W1 W2 W3

FIGURE 9

W

L

W

L

W

L

FIGURE 10

20

Conductor pipe

Heat is transmitted
around the full wetted
perimeter

Heat transfer fluid

Thermally conductive
bonding agent

Process heat transfer wall

Process material

Section showing circular conductor pipes bonded to the heat transfer surface

FIGURE 11

Heat transfer fluid

Modified conductor pipe with
enlarged heat transfer surface
for the heat transfer fluid side.

Process heat transfer wall

Process material

Section through oblong conductor pipes

FIGURE 12

Conductor pipe.

Heat transfer fluid

**Process heat transfer wall**

**Process material**

Examples of different conductor shapes and group arrangement

## FIGURE 13

Conductor pipes with
enlarged internal heat

Heat transfer fluid

**Process heat transfer wall**

**Process material**

Sections through conductor pipes with more complex internal geometry.

## FIGURE 14

Inserts used to reduce
the hold up volume of
heat transfer fluid

Process heat transfer wall

Process material

Examples of different inserts

## FIGURE 15

Containment pipe

Heat transfer fluid

Weld

Process heat transfer wall

Process material

Conventional half coil welds

## FIGURE 16

Bonding
material

Heat transfer fluid

Conductor pipe

Process heat transfer wall

Process material

One-sided solder bonding

FIGURE 17

Soft conductive
layer (if used)

Process heat
transfer wall

Process
material

Heat transfer
fluid

Conductor
pipe

Simple spring mounted conductor pipe

FIGURE 18

Two part mounted conductor pipe configuration

FIGURE 19

"V" profile expansion plate

FIGURE 20

The conductor pipes of other shapes and profile could also be used

Conductor pipe

Expansion plate

Process heat transfer wall

Process material

Examples of various expansion plate shapes

**FIGURE 21**

Expansion plate hinge

Expansion plate

Conductor pipe

Expansion plate tension spring

Process material

Expansion plate detail

Expansion plates with an open profile

**FIGURE 22**

Cross section showing expansion plate on a cylindrical vessel.

Process vessel

Process fluid

Heat transfer fluid conduit

Expansion plate

Fixing strap

## FIGURE 23

Detail showing expansion plate with cold heat transfer fluid conduit.

Process vessel

Expansion plate

Cold heat transfer fluid conduit

Fixing strap can be pulled tight with a fixed coupling or spring loaded

## FIGURE 24

**Detail showing expansion plate with hot heat transfer fluid conduit.**

Outer fin of expansion plate can move
out and in independently to
accommodate thermal expansion of
heat transfer fluid conduit.

Hot heat transfer fluid conduit

**FIGURE 25**

**EP 1 529 191 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4343626 A
- EP 0209956 W
- GB 2374948 A
- EP O209956 W